# FASCICULE DE BREVET EUROPEEN

(11) **EP 4 284 680 B1**
(45) Date de publication et mention de la délivrance du brevet: **18.09.2024**
(21) Numéro de dépôt: 21848278.4
(22) Date de dépôt: 14.12.2021
(51) Int. Cl.: B60Q 1/28

(54) **CONTRÔLE DE L'ÉCLAIRAGE EXTÉRIEUR D'UN VÉHICULE POUR L'ANIMATION LUMINEUSE APRÈS L'ARRÊT DU GROUPE MOTOPROPULSEUR**
STEUERUNG DER AUSSENBELEUCHTUNG EINES FAHRZEUGS ZUR LICHTANIMATION NACH DEM ANHALTEN DER ANTRIEBSEINHEIT
CONTROLLING THE EXTERNAL LIGHTING OF A VEHICLE FOR LIGHT ANIMATION FOLLOWING THE STOPPING OF THE PROPULSION UNIT

(30) Priorité: 28.01.2021 FR 2100789
(43) Date de publication de la demande: 06.12.2023
(73) Titulaire: Stellantis Auto SAS, 78300 Poissy (FR)
(72) Inventeur: GAMIETTE, Benjamin, 95220 HERBLAY (FR); MARX, Nathalie, 25420 VOUJEAUCOURT (FR)
(86) Numéro de dépôt international: PCT/FR2021/052323
(87) Numéro de publication internationale: WO 2022/162286

(56) Documents cités:
- WO-A1-2016/087745
- DE-A1- 102015 012 021
- DE-A1- 102016 206 275
- DE-B4- 10 338 756

## Description

### Domaine technique de l'invention

L'invention concerne les véhicules assurant au moins une fonction photométrique d'éclairage extérieur, et plus précisément le contrôle de cet éclairage extérieur.

Dans ce qui suit l'éclairage extérieur concerne aussi bien une fonction photométrique dédiée à l'éclairage de la chaussée, comme par exemple une fonction photométrique de feu de croisement ou de feu de route, qu'une fonction photométrique dédiée à la signalisation, comme par exemple une fonction photométrique de feu de position, ou de feu de jour (ou DRL (pour « Daytime running Light (or Lamp) » - signalisation lumineuse allumée automatiquement lorsque le véhicule est mis en fonctionnement pendant le jour)), ou d'emblème éclairé, ou encore d'indicateur de changement de direction (ou clignotant).

### Etat de la technique

Certains véhicules, généralement de type automobile, assurent au moins une fonction photométrique extérieure et comprennent un groupe motopropulseur propre à les déplacer, au moins un mécanisme de contrôle d'accès verrouillable/déverrouillable (éventuellement centralisé) et un dispositif de contrôle chargé de contrôler cet éclairage extérieur consécutivement à l'arrêt de leur groupe motopropulseur. C'est notamment le cas des véhicules décrits dans les documents brevet FR-B1 3074743, EP-B1 3383142 et DE-A1 10 2016 206275.

Dans certains cas le dispositif de contrôle est plus précisément chargé de déclencher une première phase d'animation lumineuse d'une première durée choisie par au moins une fonction photométrique d'éclairage extérieur en cas d'arrêt du groupe motopropulseur de son véhicule, et une deuxième phase d'animation lumineuse d'une deuxième durée choisie par au moins une fonction photométrique d'éclairage extérieur en cas de verrouillage du mécanisme de contrôle d'accès de son véhicule. Par exemple, la première phase d'animation lumineuse peut être réalisée avec la fonction photométrique de feu de position et/ou la fonction photométrique de feu de croisement, et la deuxième phase d'animation lumineuse peut être réalisée avec la fonction photométrique d'indicateur de changement de direction.

On entend ici par « phase d'animation lumineuse » une phase pendant laquelle au moins une fonction photométrique d'un véhicule fonctionne avec au moins une variation de façon continue ou discontinue et/ou selon un mode dit de défilement et/ou selon une intensité constante ou variable (par exemple décroissante), suite au déclenchement d'un évènement précis par un usager (comme par exemple un verrouillage d'ouvrant(s)).

Avec un dispositif de contrôle connu, lorsque le verrouillage du mécanisme de contrôle d'accès survient pendant la première phase d'animation lumineuse, cette dernière est interrompue et remplacée par la deuxième phase d'animation lumineuse (associée au verrouillage). Dans cette situation il peut arriver que l'enchaînement d'animations lumineuses ait une durée notablement inférieure à la première durée de la première phase d'animation lumineuse, ce qui peut perturber, voire contrarier, l'usager du véhicule lorsqu'il est habitué à cette première durée d'animation lumineuse. Cette perturbation ou cette contrariété peut être renforcée lorsque l'usager a choisi la première durée parmi plusieurs proposées par un menu de configuration de son véhicule.

En outre, dans certains véhicules disposant d'une fonction photométrique d'éclairage extérieur assurée par une source de lumière matricielle, il est possible de terminer la première phase d'animation lumineuse par une sous-phase terminale dans laquelle on fait fonctionner les différents éléments matriciels de la source selon un cycle prédéfini qui définit une signature lumineuse ou un effet de style et/ou valorise la technologie de l'éclairage extérieur du véhicule. Or, lorsque cette sous-phase terminale est absente ou interrompue, du fait du lancement de la deuxième phase d'animation lumineuse, la signature lumineuse ou l'effet de style et/ou la valorisation de la technologie de l'éclairage extérieur est/sont au moins partiellement absent(e)(s).

L'invention a donc notamment pour but de remédier à tout ou partie des inconvénients précités.

### Présentation de l'invention

Elle propose notamment à cet effet un dispositif de contrôle, d'une part, destiné à contrôler l'éclairage extérieur assuré par au moins une fonction photométrique d'un véhicule comprenant un groupe motopropulseur (propre à le déplacer) et au moins un mécanisme de contrôle d'accès verrouillable/ déverrouillable, et, d'autre part, comprenant au moins un processeur et au moins une mémoire agencés pour effectuer les opérations consistant à déclencher une première phase d'animation lumineuse d'une première durée choisie par au moins une fonction photométrique en cas d'arrêt du groupe motopropulseur et une deuxième phase d'animation lumineuse d'une deuxième durée choisie par au moins une fonction photométrique en cas de verrouillage du mécanisme de contrôle d'accès. Le processeur et la mémoire sont en outre agencés pour effectuer les opérations consistant, en cas de verrouillage du mécanisme de contrôle d'accès avant la fin de la première phase d'animation lumineuse, à interrompre la première phase d'animation lumineuse et à déclencher une troisième phase d'animation lumineuse d'une troisième durée choisie par au moins une fonction photométrique après la deuxième phase d'animation lumineuse.

Grâce à l'invention, la troisième phase d'animation lumineuse peut compenser au moins partiellement, ou éventuellement remplacer, la fin de la première phase d'animation lumineuse, ce qui permet de délivrer une signature lumineuse ou un effet de style et/ou de valoriser la technologie de l'éclairage extérieur du véhicule, mais aussi de rendre la durée de l'enchaînement d'animations lumineuses similaire à la première durée de la première phase d'animation lumineuse.

Le dispositif de contrôle selon l'invention peut comporter d'autres caractéristiques qui peuvent être prises séparément ou en combinaison, et notamment :
- son processeur et sa mémoire peuvent être agencés pour effectuer les opérations consistant, en cas de verrouillage du mécanisme de contrôle d'accès avant la fin de la première phase d'animation lumineuse, à déterminer une durée restante avant cette fin, et si cette durée restante déterminée est supérieure à une somme des deuxième et troisième durées, à déterminer une augmentation de la deuxième durée et/ou de la troisième durée de manière à obtenir une nouvelle somme des deuxième et troisième durées égale à la durée restante ;
- en présence de l'option précédente, les processeur et mémoire peuvent être agencés pour effectuer les opérations consistant à déterminer une augmentation seulement de la deuxième durée ou bien seulement de la troisième durée ;
- son processeur et sa mémoire peuvent être agencés pour effectuer les opérations consistant à déclencher la réalisation de la troisième phase d'animation lumineuse avec au moins une fonction photométrique différant de chaque fonction photométrique utilisée pour la deuxième phase d'animation lumineuse ;
- son processeur et sa mémoire peuvent être agencés pour effectuer les opérations consistant à déclencher la réalisation de la deuxième phase d'animation lumineuse avec au moins une fonction photométrique différant de chaque fonction photométrique utilisée pour la première phase d'animation lumineuse ;
- son processeur et sa mémoire peuvent être agencés pour effectuer les opérations consistant à déclencher la réalisation, d'une première part, de la première phase d'animation lumineuse avec une fonction photométrique de feu de position et/ou une fonction photométrique de feu de croisement, d'une deuxième part, de la deuxième phase d'animation lumineuse avec une fonction photométrique d'indicateur de changement de direction et/ou une fonction photométrique de feu de position, et, d'une troisième part, de la troisième phase d'animation lumineuse avec une fonction photométrique de feu de position et/ou une fonction photométrique de feu de croisement. L'invention propose également un véhicule, éventuellement de type automobile, assurant au moins une fonction photométrique d'éclairage extérieur, et comprenant un groupe motopropulseur (propre à le déplacer), au moins un mécanisme de contrôle d'accès verrouillable/déverrouillable, et un dispositif de contrôle du type de celui présenté ci-avant.

L'invention propose également un procédé, d'une part, destiné à permettre le contrôle de l'éclairage extérieur assuré par au moins une fonction photométrique d'un véhicule comprenant un groupe motopropulseur (propre à le déplacer) et au moins un mécanisme de contrôle d'accès verrouillable/ déverrouillable, et, d'autre part, comprenant une étape dans laquelle on déclenche une première phase d'animation lumineuse d'une première durée choisie par au moins une fonction photométrique en cas d'arrêt du groupe motopropulseur et une deuxième phase d'animation lumineuse d'une deuxième durée choisie par au moins une fonction photométrique en cas de verrouillage du mécanisme de contrôle d'accès.

En outre, dans cette étape, en cas de verrouillage du mécanisme de contrôle d'accès avant la fin de la première phase d'animation lumineuse, on interrompt la première phase d'animation lumineuse et on déclenche une troisième phase d'animation lumineuse d'une troisième durée choisie par au moins une fonction photométrique après la deuxième phase d'animation lumineuse.

L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant dans un véhicule comprenant un groupe motopropulseur (propre à le déplacer) et au moins un mécanisme de contrôle d'accès verrouillable/ déverrouillable et assurant au moins une fonction photométrique d'éclairage extérieur, pour contrôler cet éclairage extérieur après un arrêt du groupe motopropulseur.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un calculateur comprenant un exemple de réalisation d'un dispositif de contrôle selon l'invention, et
[Fig. 2] illustre schématiquement un exemple d'algorithme mettant en oeuvre un exemple de procédé de contrôle selon l'invention.

### Description détaillée de l'invention

L'invention a notamment pour but de proposer un dispositif de contrôle DC, et un procédé de contrôle associé, destinés à permettre le contrôle de l'éclairage extérieur assuré par au moins une fonction photométrique d'un véhicule, comprenant aussi un groupe motopropulseur propre à le déplacer et au moins un mécanisme de contrôle d'accès verrouillable/déverrouillable, après un arrêt de ce groupe motopropulseur.

Ce contrôle de l'éclairage extérieur est préférentiellement assuré lorsque le véhicule est dans la pénombre, et donc lorsqu'une partie des blocs optiques assurant l'éclairage extérieur est en fonctionnement. Mais on pourrait envisager un contrôle permanent (indépendamment de la luminosité extérieure).

Il est rappelé que l'on entend ici par « fonction photométrique d'éclairage extérieur » aussi bien une fonction photométrique dédiée à l'éclairage de la chaussée, comme par exemple une fonction photométrique de feu de croisement ou de feu de route, qu'une fonction photométrique dédiée à la signalisation, comme par exemple une fonction photométrique de feu de position, ou de feu de jour (ou DRL), ou d'emblème éclairé, ou encore d'indicateur de changement de direction (ou clignotant).

Au moins une source de lumière d'au moins un bloc optique participe à une fonction photométrique d'éclairage extérieur concernée par l'invention. Chaque source de lumière peut comprendre au moins une diode électroluminescente, de type classique (ou LED (« Light-Emitting Diode »)) ou de type organique (ou OLED (« Organic Light-Emitting Diode »)), ou au moins une diode laser, ou encore au moins une ampoule, par exemple. Par ailleurs, au moins une source de lumière peut être de type matriciel. Dans ce cas, elle comprend des sous-sources (de lumière) pouvant être contrôlées indépendamment les unes des autres ou au minimum par groupes d'au moins deux.

Dans ce qui suit, on considère, à titre d'exemple non limitatif, que le dispositif de contrôle DC est destiné à équiper un véhicule de type automobile, comme par exemple une voiture. Mais l'invention n'est pas limitée à cette application. En effet, un dispositif de contrôle DC selon l'invention peut équiper n'importe quel véhicule (terrestre, maritime (ou fluvial), ou aérien) disposant d'au moins une fonction photométrique d'éclairage extérieur, d'un groupe motopropulseur propre à le déplacer et d'au moins un mécanisme de contrôle d'accès verrouillable/déverrouillable (éventuellement de type centralisé).

Le groupe motopropulseur comprend au moins un moteur (thermique ou non thermique) chargé de produire de la puissance motrice au sein de la chaîne de transmission du véhicule, et peut donc être soit mis en fonctionnement, soit arrêté (ou coupé) de façon durable (ou non temporaire), par exemple au moyen d'une clé de contact ou d'un plip et/ou d'une action sur un organe de commande dédié. Par ailleurs, le mécanisme de contrôle d'accès permet ici de contrôler l'accès à l'intérieur du véhicule (il s'agit par exemple du système de fermeture centralisée des ouvrants). De plus, chaque fonction photométrique d'éclairage extérieur est assurée par au moins un bloc optique du véhicule (feu avant (ou phare ou projecteur), ou feu arrière), et un bloc optique peut éventuellement assurer au moins deux fonctions photométriques d'éclairage extérieur.

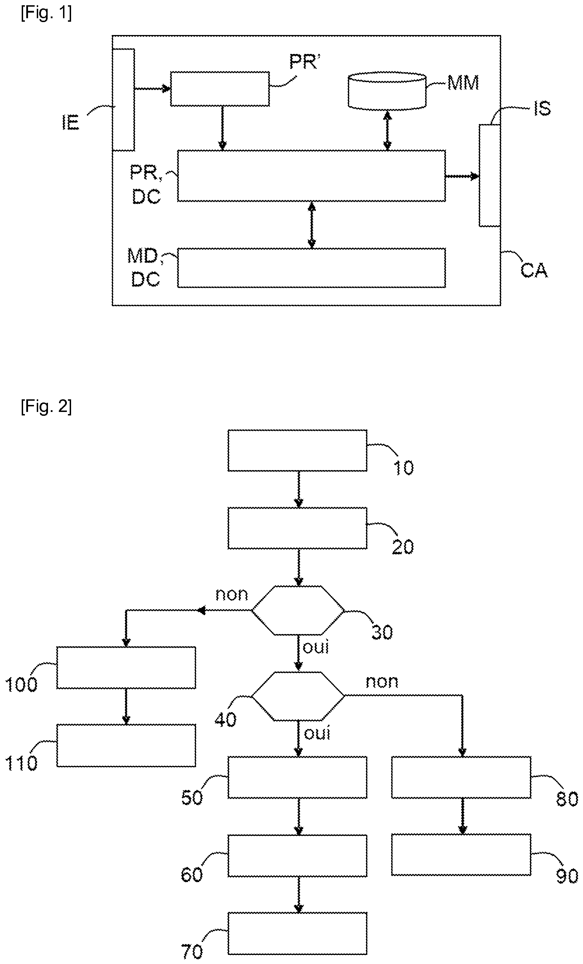

On a schématiquement illustré sur la figure 1 un exemple de réalisation non limitatif d'un dispositif de contrôle DC selon l'invention. Comme illustré, un dispositif de contrôle DC, selon l'invention, comprend au moins un processeur PR, par exemple de signal numérique (ou DSP (« Digital Signal Processor »)), et au moins une mémoire MD. Ce processeur PR et cette mémoire MD font de préférence partie d'un calculateur CA qui peut donc être réalisé sous la forme d'une combinaison de circuits ou composants électriques ou électroniques (ou « hardware ») et de modules logiciels (ou « software »). Ce calculateur CA peut être dédié au contrôle de l'éclairage extérieur selon l'invention, ou bien peut assurer au sein du véhicule au moins une autre fonction que celle du contrôle précité.

La mémoire MD est vive afin de stocker des instructions pour la mise en oeuvre par le processeur PR d'une partie au moins du procédé de contrôle décrit plus loin (et donc assurer ses fonctions).

Le processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique.

Le processeur PR et la mémoire MD (et donc leur calculateur CA) sont agencés pour effectuer les opérations consistant à déclencher une première phase d'animation lumineuse d'une première durée choisie par au moins une fonction photométrique d'éclairage extérieur du véhicule en cas d'arrêt du groupe motopropulseur du véhicule, et une deuxième phase d'animation lumineuse d'une deuxième durée choisie par au moins une fonction photométrique d'éclairage extérieur du véhicule en cas de verrouillage du mécanisme de contrôle d'accès du véhicule. En d'autres termes, dès que le dispositif de contrôle DC est informé de l'arrêt du groupe motopropulseur, il déclenche la première phase d'animation lumineuse, et dès que le dispositif de contrôle DC est informé du verrouillage du mécanisme de contrôle d'accès il déclenche la deuxième phase d'animation lumineuse. Si ce verrouillage survient pendant la première phase d'animation lumineuse, alors cette dernière est interrompue avant sa fin et remplacée par la deuxième phase d'animation lumineuse.

Afin que l'interruption de la première phase d'animation lumineuse ne soit pas « pénalisante », le processeur PR et la mémoire MD (et donc leur calculateur CA) sont agencés pour effectuer les opérations consistant, en cas de verrouillage du mécanisme de contrôle d'accès avant la fin de la première phase d'animation lumineuse, à déclencher une troisième phase d'animation lumineuse d'une troisième durée choisie par au moins une fonction photométrique d'éclairage extérieur du véhicule après la deuxième phase d'animation lumineuse.

Ainsi, la troisième phase d'animation lumineuse peut compenser au moins partiellement, ou éventuellement remplacer, la fin de la première phase d'animation lumineuse. Cela peut permettre de délivrer une signature lumineuse ou un effet de style et/ou de valoriser la technologie de l'éclairage extérieur du véhicule. En outre, cela peut permettre de rendre la durée de l'enchaînement des phases d'animation lumineuse similaire à la première durée de la première phase d'animation lumineuse, et donc de ne pas perturber, ou contrarier, l'usager du véhicule qui est habitué à cette première durée d'animation lumineuse.

Chaque phase d'animation lumineuse (déclenchée par une action d'un usager) peut prendre n'importe quelle forme dès lors qu'elle comprend au moins une variation, par exemple d'intensité lumineuse ou de sous-source(s) utilisée(s) au sein d'une source lumineuse participant à une fonction photométrique d'éclairage extérieur du véhicule. Ainsi, il peut s'agir d'une phase pendant laquelle au moins une fonction photométrique du véhicule fonctionne de façon continue ou discontinue et/ou selon un mode dit de défilement et/ou selon une intensité constante ou variable (par exemple décroissante). Lorsqu'une source de lumière comprend des sous-sources contrôlées indépendamment les unes des autres ou au minimum par groupes d'au moins deux, elle peut assurer un éclairage extérieur (et donc une animation lumineuse) matriciel(le). De telles sous-sources peuvent, par exemple, être des diodes électroluminescentes classiques (ou LEDs) ou organiques (ou OLEDs).

Par exemple, le processeur PR et la mémoire MD (et donc leur calculateur CA) peuvent être agencés pour effectuer les opérations consistant, en cas de verrouillage du mécanisme de contrôle d'accès avant la fin de la première phase d'animation lumineuse, à déterminer la durée restante avant cette fin. Si cette durée restante déterminée est supérieure à la somme des deuxième et troisième durées, le processeur PR et la mémoire MD (et donc leur calculateur CA) déterminent ensuite une augmentation de la deuxième durée et/ou de la troisième durée de manière à obtenir une nouvelle somme des deuxième et troisième durées qui est égale à cette durée restante déterminée.

Cette option permet avantageusement de rendre la durée de l'enchaînement des première (interrompue), deuxième et troisième phases d'animation lumineuse sensiblement identique à la première durée de la première phase d'animation lumineuse. Ainsi, l'usager du véhicule, qui est habitué à cette première durée d'animation lumineuse, n'est ni perturbé ni contrarié.

En présence de la dernière option, le processeur PR et la mémoire MD (et donc leur calculateur CA) peuvent être agencés pour effectuer les opérations consistant à déterminer une augmentation seulement de la deuxième durée. En variante, ils peuvent être agencés pour effectuer les opérations consistant à déterminer une augmentation seulement de la troisième durée. Mais dans une autre variante, ils pourraient être agencés pour effectuer les opérations consistant à déterminer une augmentation de la deuxième durée et une augmentation complémentaire de la troisième durée.

On notera que le processeur PR et la mémoire MD (et donc leur calculateur CA) peuvent être agencés pour effectuer les opérations consistant à déclencher la réalisation de la troisième phase d'animation lumineuse avec au moins une fonction photométrique qui diffère de chaque fonction photométrique utilisée pour la deuxième phase d'animation lumineuse. Mais cela n'est pas obligatoire. En effet, on pourrait utiliser une même fonction photométrique pour les deuxième et troisième phases d'animation lumineuse mais avec des animations lumineuses facilement différentiables.

On notera également que le processeur PR et la mémoire MD (et donc leur calculateur CA) peuvent être agencés pour effectuer les opérations consistant à déclencher la réalisation de la deuxième phase d'animation lumineuse avec au moins une fonction photométrique qui diffère de chaque fonction photométrique utilisée pour la première phase d'animation lumineuse. Mais cela n'est pas obligatoire. En effet, on pourrait utiliser une même fonction photométrique pour les première et deuxième phases d'animation lumineuse mais avec des animations lumineuses facilement différentiables.

Comme indiqué plus haut, chaque fonction photométrique d'éclairage extérieur concernée par l'invention peut être dédiée à l'éclairage de la chaussée ou à la signalisation. Par conséquent, chaque fonction photométrique d'éclairage extérieur concernée par l'invention peut, par exemple, être une fonction photométrique de feu de croisement, une fonction photométrique de feu de route, une fonction photométrique de feu de position, une fonction photométrique d'indicateur de changement de direction (ou clignotant), une fonction photométrique d'emblème éclairé, ou une fonction photométrique de feu de jour.

A titre d'exemple non limitatif, le processeur PR et la mémoire MD (et donc leur calculateur CA) peuvent être agencés pour effectuer les opérations consistant à déclencher la réalisation de la première phase d'animation lumineuse avec la fonction photométrique de feu de position et/ou la fonction photométrique de feu de croisement, de la deuxième phase d'animation lumineuse avec la fonction photométrique d'indicateur de changement de direction et/ou la fonction photométrique de feu de position, et de la troisième phase d'animation lumineuse avec la fonction photométrique de feu de position et/ou la fonction photométrique de feu de croisement. Il ne s'agit ici que d'un exemple illustratif, car les possibilités sont multiples.

On notera également qu'au moins la première durée de la première phase d'animation lumineuse peut être éventuellement choisie par l'usager du véhicule parmi plusieurs proposées par un menu de configuration de son véhicule. A titre d'exemple purement illustratif l'usager peut choisir une première durée de 15 s, 30 s ou 60 s.

Les deuxième et troisième phases d'animation lumineuse ont de préférence respectivement des deuxième et troisième durées fixes (avant augmentation). Par exemple, la deuxième durée (avant augmentation) peut être égale à 5 s, et la troisième durée (avant augmentation) peut être égale à 3 s. Mais on pourrait envisager que l'usager du véhicule puisse choisir la deuxième durée parmi plusieurs et/ou la troisième durée parmi plusieurs, via un menu de configuration du véhicule.

On notera également, comme illustré non limitativement sur la figure 1, que le calculateur CA peut aussi comprendre, en complément de sa mémoire vive MD et de son processeur PR, une mémoire de masse MM, notamment pour le stockage des première, deuxième et troisième durées, et de données intermédiaires intervenant dans tous ses calculs et traitements. Par ailleurs, ce calculateur CA peut aussi comprendre une interface d'entrée IE pour la réception d'au moins les informations signalant l'arrêt du groupe motopropulseur et le verrouillage du mécanisme de contrôle d'accès pour les utiliser dans des calculs ou traitements, éventuellement après les avoir mis en forme et/ou démodulés et/ou amplifiés, de façon connue en soi, au moyen d'un processeur de signal numérique PR'. De plus, ce calculateur CA peut aussi comprendre une interface de sortie IS, notamment pour délivrer des messages et des ordres ou commandes (notamment à chaque bloc optique assurant une fonction photométrique d'éclairage extérieur concernée par l'invention).

Comme mentionné plus haut, l'invention peut aussi être considérée sous la forme d'un procédé de contrôle, d'une part, destiné à permettre le contrôle de l'éclairage extérieur assuré par au moins une fonction photométrique d'un véhicule, comprenant aussi un groupe motopropulseur propre à le déplacer et au moins un mécanisme de contrôle d'accès verrouillable/déverrouillable, après un arrêt de ce groupe motopropulseur, et, d'autre part, pouvant être mis en oeuvre au moins partiellement par le dispositif de contrôle DC décrit ci-avant. Les fonctionnalités offertes par la mise en oeuvre du procédé de contrôle selon l'invention étant identiques à celles offertes par le dispositif de contrôle DC présenté ci-avant, seule la combinaison de fonctionnalités principales offerte par le procédé est présentée ci-après.

Ce procédé de contrôle comprend une étape 10-110 dans laquelle on déclenche une première phase d'animation lumineuse d'une première durée choisie par au moins une fonction photométrique en cas d'arrêt du groupe motopropulseur du véhicule et une deuxième phase d'animation lumineuse d'une deuxième durée choisie par au moins une fonction photométrique en cas de verrouillage du mécanisme de contrôle d'accès du véhicule, et si ce verrouillage commence avant la fin de la première phase d'animation lumineuse, on déclenche une troisième phase d'animation lumineuse d'une troisième durée choisie par au moins une fonction photométrique après la deuxième phase d'animation lumineuse.

On a schématiquement illustré sur la figure 2 un exemple d'algorithme mettant en oeuvre un procédé de contrôle selon l'invention. Par exemple, cet algorithme débute lorsque le groupe motopropulseur est en marche et que le véhicule est dans la pénombre avec une partie de ses blocs optiques assurant l'éclairage extérieur en fonctionnement.

L'algorithme comprend une sous-étape 10 dans laquelle on (le dispositif DC) est informé de l'arrêt du groupe motopropulseur.

Puis, dans une sous-étape 20 on (le dispositif DC) déclenche la première phase d'animation lumineuse d'une première durée choisie par au moins une fonction photométrique.

Puis, dans une sous-étape 30 on (le dispositif DC) détermine de façon répétée si le mécanisme de contrôle d'accès a été verrouillé.

Dans l'affirmative (verrouillage), dans une sous-étape 40 on (le dispositif DC) détermine si la durée restante avant la fin de la première durée de la première phase d'animation lumineuse est supérieure à la somme des deuxième et troisième durées (initialement choisies) respectivement des deuxième et troisième phases d'animation lumineuse.

Dans l'affirmative, dans une sous-étape 50 on (le dispositif DC) détermine, par exemple, une augmentation de la deuxième durée de manière à obtenir une nouvelle somme des deuxième et troisième durées qui est égale à la durée restante déterminée lors de la sous-étape 40.

Puis, dans une sous-étape 60 on (le dispositif DC) déclenche la réalisation de la deuxième phase d'animation lumineuse par au moins une fonction photométrique pendant une durée qui est égale à la nouvelle deuxième durée (augmentée).

Puis, dans une sous-étape 70, survenant juste après la fin de la deuxième phase d'animation lumineuse, on (le dispositif DC) déclenche la réalisation de la troisième phase d'animation lumineuse pendant la troisième durée choisie par au moins une fonction photométrique. L'algorithme se termine alors.

En revanche, si dans la sous-étape 40 la durée restante avant la fin de la première durée est inférieure à la somme des deuxième et troisième durées (initialement choisies), alors dans une sous-étape 80 on (le dispositif DC) déclenche la réalisation de la deuxième phase d'animation lumineuse par au moins une fonction photométrique pendant la deuxième durée choisie (non augmentée).

Puis, dans une sous-étape 90, survenant juste après la fin de la deuxième phase d'animation lumineuse, on (le dispositif DC) déclenche la réalisation de la troisième phase d'animation lumineuse pendant la troisième durée choisie par au moins une fonction photométrique. L'algorithme se termine alors.

Maintenant, si à la fin de la sous-étape 30 le mécanisme de contrôle d'accès n'a pas été verrouillé, alors dans une sous-étape 100 la première phase d'animation lumineuse se termine sans interruption à la fin de sa première durée choisie.

Puis, dans une sous-étape 110 en cas de signalement du verrouillage on (le dispositif DC) déclenche la réalisation de la deuxième phase d'animation lumineuse par au moins une fonction photométrique pendant la deuxième durée choisie (non augmentée). L'algorithme se termine alors sans que l'on réalise la troisième phase d'animation lumineuse.

On notera qu'une ou plusieurs sous-étapes de l'étape 10-110 du procédé de contrôle peuvent être effectuées par des composants différents. Ainsi, le procédé de contrôle peut-être mis en oeuvre par une pluralité de processeurs de signal numérique, mémoire vive, mémoire de masse, interface d'entrée, interface de sortie.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de contrôle décrit ci-avant pour contrôler l'éclairage extérieur assuré par au moins une fonction photométrique d'éclairage extérieur d'un véhicule comprenant aussi un groupe motopropulseur (propre à le déplacer) et au moins un mécanisme de contrôle d'accès verrouillable/déverrouillable, après un arrêt de ce groupe motopropulseur.

## Revendications

1. Dispositif de contrôle (DC) pour contrôler l'éclairage extérieur assuré par au moins une fonction photométrique d'un véhicule comprenant un groupe motopropulseur et au moins un mécanisme de contrôle d'accès verrouillable/déverrouillable, ledit dispositif (DC) comprenant au moins un processeur (PR) et au moins une mémoire (MD) agencés pour effectuer les opérations consistant à déclencher une première phase d'animation lumineuse d'une première durée choisie par au moins une fonction photométrique en cas d'arrêt dudit groupe motopropulseur et une deuxième phase d'animation lumineuse d'une deuxième durée choisie par au moins une fonction photométrique en cas de verrouillage dudit mécanisme de contrôle d'accès, et pour effectuer les opérations consistant, en cas de verrouillage dudit mécanisme de contrôle d'accès avant la fin de ladite première phase d'animation lumineuse, à interrompre la première phase d'animation lumineuse et à déclencher une troisième phase d'animation lumineuse d'une troisième durée choisie par au moins une fonction photométrique après ladite deuxième phase d'animation lumineuse

2. Dispositif selon la revendication 1, **caractérisé en ce que** lesdits processeur (PR) et mémoire (MD) sont agencés pour effectuer les opérations consistant, en cas de verrouillage dudit mécanisme de contrôle d'accès avant la fin de ladite première phase d'animation lumineuse, à déterminer une durée restante avant cette fin, et si ladite durée restante déterminée est supérieure à une somme desdites deuxième et troisième durées, à déterminer une augmentation de ladite deuxième durée et/ou de ladite troisième durée de manière à obtenir une nouvelle somme desdites deuxième et troisième durées égale à ladite durée restante.

3. Dispositif selon la revendication 2, **caractérisé en ce que** lesdits processeur (PR) et mémoire (MD) sont agencés pour effectuer les opérations consistant à déterminer une augmentation seulement de ladite deuxième durée.

4. Dispositif selon la revendication 2, **caractérisé en ce que** lesdits processeur (PR) et mémoire (MD) sont agencés pour effectuer les opérations consistant à déterminer une augmentation seulement de ladite troisième durée.

5. Dispositif selon l'une des revendications 1 à 4, **caractérisé en ce que** lesdits processeur (PR) et mémoire (MD) sont agencés pour effectuer les opérations consistant à déclencher la réalisation de ladite troisième phase d'animation lumineuse avec au moins une fonction photométrique différant de chaque fonction photométrique utilisée pour ladite deuxième phase d'animation lumineuse.

6. Dispositif selon l'une des revendications 1 à 5, **caractérisé en ce que** lesdits processeur (PR) et mémoire (MD) sont agencés pour effectuer les opérations consistant à déclencher la réalisation de ladite deuxième phase d'animation lumineuse avec au moins une fonction photométrique différant de chaque fonction photométrique utilisée pour ladite première phase d'animation lumineuse.

7. Dispositif selon l'une des revendications 1 à 6, **caractérisé en ce que** lesdits processeur (PR) et mémoire (MD) sont agencés pour effectuer les opérations consistant à déclencher la réalisation i) de ladite première phase d'animation lumineuse avec une fonction photométrique de feu de position et/ou une fonction photométrique de feu de croisement, ii) de ladite deuxième phase d'animation lumineuse avec une fonction photométrique d'indicateur de changement de direction et/ou une fonction photométrique de feu de position, et iii) de ladite troisième phase d'animation lumineuse avec une fonction photométrique de feu de position et/ou une fonction photométrique de feu de croisement.

8. Véhicule comprenant un groupe motopropulseur et au moins un mécanisme de contrôle d'accès verrouillable/déverrouillable et assurant au moins une fonction photométrique d'éclairage extérieur, **caractérisé en ce qu'**il comprend en outre un dispositif de contrôle (DC) selon l'une des revendications précédentes.

9. Procédé de contrôle de l'éclairage extérieur assuré par au moins une fonction photométrique d'un véhicule comprenant un groupe motopropulseur et au moins un mécanisme de contrôle d'accès verrouillable/déverrouillable, ledit procédé comprenant une étape (10-110) dans laquelle on déclenche une première phase d'animation lumineuse d'une première durée choisie par au moins une fonction photométrique en cas d'arrêt dudit groupe motopropulseur et une deuxième phase d'animation lumineuse d'une deuxième durée choisie par au moins une fonction photométrique en cas de verrouillage dudit mécanisme de contrôle d'accès, et en cas de verrouillage dudit mécanisme de contrôle d'accès avant la fin de ladite première phase d'animation lumineuse, on interrompt la première phase d'animation lumineuse et on déclenche une troisième phase d'animation lumineuse d'une troisième durée choisie par au moins une fonction photométrique après ladite deuxième phase d'animation lumineuse.

10. Produit programme d'ordinateur comprenant un jeu d'instructions qui, lorsqu'il est exécuté par des moyens de traitement, est propre à mettre en oeuvre le procédé de contrôle selon la revendication 9 dans un véhicule comprenant un groupe motopropulseur et au moins un mécanisme de contrôle d'accès verrouillable/déverrouillable et assurant au moins une fonction photométrique d'éclairage extérieur, pour contrôler ledit éclairage extérieur après un arrêt dudit groupe motopropulseur.

## Patentansprüche

1. Steuervorrichtung (DC) zur Steuerung der Außenbeleuchtung, die durch mindestens eine photometrische Funktion eines Fahrzeugs mit einem Antriebsaggregat und mindestens einem verriegelbaren/entriegelbaren Zugangskontrollmechanismus bereitgestellt wird, wobei die Vorrichtung (DC) mindestens einen Prozessor (PR) und mindestens einen Speicher (MD) umfasst, die zur Durchführung von Operationen zur Auslösung einer ersten Phase der Lichtanimation angeordnet sind Dauer, die durch mindestens eine photometrische Funktion bei Stillstand des Antriebssystems und eine zweite Phase der Lichtanimation mit einer zweiten Dauer ausgewählt wird, die durch mindestens eine photometrische Funktion bei Verriegelung des Zugangskontrollmechanismus ausgewählt wird, und Verfahren, bei Verriegelung des Zugangskontrollmechanismus vor Ende der ersten Phase der Lichtanimation die erste Phase der Lichtanimation zu unterbrechen und eine dritte Phase auszulösen Phase der Lichtanimation mit einer dritten Dauer, die nach der zweiten Phase der Lichtanimation durch mindestens eine photometrische Funktion ausgewählt wird

2. Vorrichtung nach Anspruch 1, **dadurch gekennzeichnet, dass** der Prozessor (PR) und der Speicher (MD) so angeordnet sind, dass sie die Operationen ausführen, bei Verriegelung des Zugangskontrollmechanismus vor dem Ende der ersten Phase der Lichtanimation eine Restdauer vor diesem Zweck zu bestimmen und wenn die bestimmte Restdauer größer als eine Summe der zweiten und dritten Zeitdauer ist, eine Erhöhung der zweiten und/oder dritten Dauer zu bestimmen Dauer, um eine neue Summe der zweiten und dritten Dauer zu erhalten, die der verbleibenden Dauer entspricht.

3. Vorrichtung nach Anspruch 2, **dadurch gekennzeichnet, dass** der Prozessor (PR) und der Speicher (MD) so angeordnet sind, dass sie die Operationen ausführen, die darin bestehen, eine Erhöhung nur der zweiten Zeitdauer zu bestimmen.

4. Vorrichtung nach Anspruch 2, **dadurch gekennzeichnet, dass** der Prozessor (PR) und der Speicher (MD) so angeordnet sind, dass sie die Operationen ausführen, die darin bestehen, eine Erhöhung nur der dritten Zeitdauer zu bestimmen.

5. Vorrichtung nach einem der Ansprüche 1 bis 4, **dadurch gekennzeichnet, dass** der Prozessor (PR) und der Speicher (MD) so angeordnet sind, dass sie die Vorgänge des Auslösens der dritten Phase der Lichtanimation mit mindestens einer photometrischen Funktion ausführen, die sich von jeder photometrischen Funktion unterscheidet, die für die zweite Phase der Lichtanimation verwendet wird.

6. Vorrichtung nach einem der Ansprüche 1 bis 5, **dadurch gekennzeichnet, dass** der Prozessor (PR) und der Speicher (MD) so angeordnet sind, dass sie die Vorgänge ausführen, die darin bestehen, die Durchführung der zweiten Phase der Lichtanimation mit mindestens einer photometrischen Funktion durchzuführen, die sich von jeder photometrischen Funktion unterscheidet, die für die erste Phase der Lichtanimation verwendet wird.

7. Vorrichtung nach einem der Ansprüche 1 bis 6, **dadurch gekennzeichnet, dass** der Prozessor (PR) und der Speicher (MD) so angeordnet sind, dass sie die Schritte ausführen, die darin bestehen, i) die Durchführung der ersten Phase der Lichtanimation mit einer photometrischen Funktion der Positionsleuchte und/oder einer photometrischen Funktion des Abblendlichts, ii) der zweiten Phase der Lichtanimation mit einer photometrischen Funktion der Richtungsänderungsanzeige und/Funktion durchzuführen eine fotometrische Funktion des Begrenzungslichts und iii) der dritten Phase der Lichtanimation mit einer fotometrischen Funktion des Begrenzungslichts und/oder einer fotometrischen Funktion des Abblendlichts.

8. Fahrzeug mit einem Antriebsaggregat und mindestens einem verriegelbaren/entriegelbaren Zugangskontrollmechanismus, der mindestens eine photometrische Außenbeleuchtungsfunktion bereitstellt, **dadurch gekennzeichnet, dass** es ferner eine Kontrolleinrichtung (DC) nach einem der vorhergehenden Ansprüche umfasst.

9. Verfahren zur Steuerung der Außenbeleuchtung durch mindestens eine photometrische Funktion eines Fahrzeugs mit einem Antriebsaggregat und mindestens einem verriegelbaren/entriegelbaren Zugangskontrollmechanismus, wobei das Verfahren einen Schritt (10-110) umfasst, in dem eine erste Lichtanimationsphase mit einer ersten Zeitdauer eingeleitet wird, die durch mindestens eine photometrische Funktion bei Stillstand des Antriebsaggregats ausgewählt wird, und Die zweite Phase der Lichtanimation mit einer zweiten Dauer, die durch mindestens eine photometrische Funktion gewählt wird, wenn der Zugangskontrollmechanismus verriegelt wird und wenn der Zugangskontrollmechanismus vor dem Ende der ersten Phase der Lichtanimation verriegelt wird, wird die erste Phase der Lichtanimation unterbrochen und eine dritte Phase der Lichtanimation mit einer dritten Dauer eingeleitet, die durch mindestens eine fotometrische Funktion nach der zweiten Phase gewählt wird Leuchtzeichen.

10. Computerprogrammprodukt, das einen Satz von Befehlen umfasst, die, wenn sie durch Verarbeitungsmittel ausgeführt werden, geeignet sind, das Steuerverfahren nach Anspruch 9 in einem Fahrzeug durchzuführen, das eine Antriebsanlage und mindestens einen verriegelbaren/entriegelbaren Zugangskontrollmechanismus umfasst und mindestens eine fotometrische Außenbeleuchtungsfunktion bereitstellt, um die Außenbeleuchtung nach dem Anhalten der Antriebsanlage zu steuern.

## Claims

1. Control device (DC) to control the exterior lighting provided by at least one photometric function of a vehicle comprising a powertrain and at least one lockable/unlockable access control mechanism, that device (DC) comprising at least one processor (PR) and at least one memory (MD) designed to perform the operations of triggering a first phase of light animation of a first duration chosen by at least one function photometric in the event that the said powerplant is stopped and a second phase of light animation of a second duration chosen by at least one photometric function in the event of the locking of the access control mechanism, and to perform operations consisting, in the event of the locking of the access control mechanism before the end of the first phase of light animation, of interrupting the first phase of light animation and triggering a third phase of light animation a third duration chosen by at least one photometric function after that second phase of light animation

2. A device in accordance with Claim 1, **characterized by** the fact that the said processor (PR) and memory (MD) are arranged to carry out operations consisting, in the event that the access control mechanism is locked before the end of the first phase of the light animation, in determining a period remaining before that end, and if the remaining period determined is greater than a sum of the said second and third periods, in determining an increase in the said second and/or third periods so as to obtain a new sum of the second and third periods equal to the remaining period.

3. A device in accordance with Claim 2, **characterized by** the arrangement of the said processor (PR) and memory (MD) to perform the operations of determining an increase only of the said second duration.

4. A device in accordance with Claim 2, **characterized by** the arrangement of the said processor (PR) and memory (MD) to perform the operations of determining an increase only of the said third duration.

5. A device according to one of claims 1 to 4, **characterized by** the arrangement of the said processor (PR) and memory (MD) to perform the operations of triggering the realization of the third phase of light animation with at least one photometric function different from each photometric function used for the second phase of light animation.

6. A device according to one of claims 1 to 5, **characterized by** the arrangement of the said processor (PR) and memory (MD) to perform the operations of triggering the realization of the second phase of light animation with at least one photometric function different from each photometric function used for the first phase of light animation.

7. Device according to one of the claims 1 to 6, characterized as the said processor (PR) and memory (MD) are arranged to perform the operations of triggering the realization i) of the first phase of light animation with a photometric position lamp function and/or a photometric function of the passing beam headlamp, (ii) of the second phase of light animation with a photometric function of the direction change indicator and/or a photometric function Position light gage, and (iii) of the said third phase of luminous animation with a photometric position light function and/or a photometric function of the passing beam.

8. A vehicle consisting of a powertrain and at least one lockable/unlockable access control mechanism and providing at least one photometric outdoor lighting function, **characterized by** an additional control device (DC) in accordance with one of the preceding claims.

9. Process for controlling the exterior lighting provided by at least one photometric function of a vehicle comprising a powertrain and at least one locking/unlocking access control mechanism, that process consisting of a step (10-110) in which a first phase of light animation of a first duration chosen by at least one photometric function in the event of a shutdown of that powertrain is initiated and a second phase of light animation of a second duration chosen by at least one photometric function in the event of the locking of the access control mechanism, and in the case of the locking of the access control mechanism before the end of the first phase of light animation, the first phase of light animation shall be interrupted and a third phase of light animation of a third duration chosen by at least one photometric function after the second phase of animation shall be initiated bright.

10. A computer program product consisting of a set of instructions which, when executed by means of processing, is capable of implementing the control process according to claim 9 in a vehicle comprising a powertrain and at least one locking/unlocking access control mechanism and providing at least one photometric function of outdoor lighting, to control the said exterior lighting after a stop of the said powertrain.
